# FASCICULE DE BREVET EUROPEEN

(11) **EP 0 587 463 B1**
(45) Date de publication et mention de la délivrance du brevet: **25.09.1996**
(21) Numéro de dépôt: 93401789.8
(22) Date de dépôt: 08.07.1993
(51) Int. Cl.: A47J 39/00, F25D 23/12, A21B 1/44, A23L 3/18, A23L 3/08

(54) **Unité de cuisson et de refroidissement simultanés de produits alimentaires**
Einheit zum gleichzeitigen Garen und Kühlen von Lebensmitteln
Unit for simultaneously cooking and chilling foodstuff

(30) Priorité: 27.08.1992 FR 9210507
(43) Date de publication de la demande: 16.03.1994
(73) Titulaire: SOCIETE ANONYME: SOCIETE DE CONSTRUCTIONS DE MATERIEL METALLIQUE ET ELECTRIQUE - S.O.C.A.M.E.L., Lieudit "Allivet" (FR)
(72) Inventeur: Beizermann, Michel, F-38500 Voiron (FR)
(74) Mandataire: Bourgognon, Jean-Marie

(56) Documents cités:
- DE-A- 3 002 610
- FR-A- 2 621 455
- FR-A- 2 626 741
- GB-A- 411 535
- GB-A- 2 017 479
- GB-A- 2 056 249

## Description

La présente invention a pour objet une unité de cuisson et de refroidissement simultanés de produits alimentaires sur chariots.

Elle concerne le secteur de la préparation des repas à consommation différée pour les collectivités telles qu'hôpitaux, entreprises importantes, établissements scolaires ou similaires.

Dans le procédé de cuisson et de refroidissement conventionnel, utilisé dans les cuisines centrales des collectivités, les aliments sont habituellement cuits dans des marmites, des sauteuses ou des cuiseurs à vapeur, des fours à air pulsé et plus récemment dans des appareils multi-fonctions capables de cuire à la fois à la vapeur et/ou à l'air pulsé. Dès la fin de leur cuisson les aliments sont extraits de ces appareils pour être placés dans des cellules de refroidissement rapide séparées et être entreposés dans des chambres froides à la température de 3°C. C'est à partir de ce stock de denrées cuites et réfrigérées, que l'on procédera à la composition de menus destinés aux consommateurs. Les repas ainsi constitués seront remis en température dans des appareils spécifiques au dernier moment précédent la consommation.

Ce procédé d'élaboration des repas avec consommation différée est connu sous le nom de "Liaison Froide" en français et de "Cook-Chill" en anglais.

Le traitement de cuisson et de refroidissement rapide effectué dans des appareils séparés présente des inconvénients de rupture de charge, et particulièrement celui de l'absence de contrôle des opérations manuelles qui consistent à sortir les chariots chargés d'aliments du four et à les introduire dans la cellule de refroidissement. Toute attente intermédiaire pour quelque motif que ce soit peut constituer une infraction à la législation qui impose un délai maximum de deux heures, pour passer de la température de cuisson à la température de 3°C au coeur des produits.

Une unité de cuisson et de refroidissement conformément au préambule de la revendication 1 est connu de FR-A-2 621 455.

Le dispositif selon la présente invention, telle que définie dans la revendication 1, supprime tous ces inconvenients. En effet, il permet le transfert des aliments de la zone de cuisson dans la zone de réfrigération, sans délai et sans aucune manipulation. Aucune charge ne peut passer de la cuisson en chambre froide de stockage, sans refroidissement rapide, ce qui représente une sécurité absolue.

Il est constitué par la combinaison d'une enceinte équipée d'un plateau rotatif pouvant recevoir deux charges mobiles sur chariots, et permettant leur transfert sans manipulations d'une zone de cuisson isolée dans une zone de réfrigération également isolée, la paroi verticale isolante séparant les deux zones étant elle même solidaire du plateau rotatif.

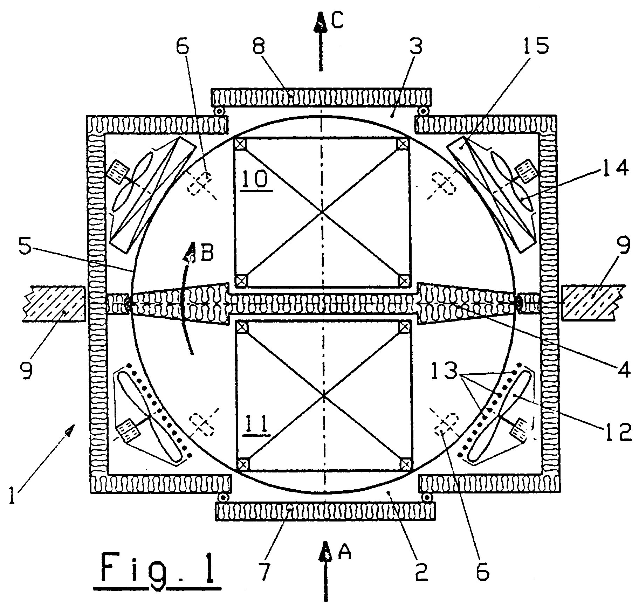

La description détaillée ci-après se rapporte à un exemple non limitatif d'une des formes de réalisation de l'objet de l'invention, en se référant au dessin schématique annexé.

Le dispositif est constitué d'une enceinte 1 isolée unique constitué de deux zones: une zone de cuisson 2, et une zone de réfrigération rapide 3, séparées par une paroi verticale 4 isolée montée sur un plateau rotatif 5 entraîné par un dispositif électro-moto-réducteur (non représenté) monté sur le plafond extérieur de l'appareil, la rotation du plateau s'effectuant grâce à des roulettes 6 reposant sur le sol de l'enceinte, ou à tout autre système de pivot. L'enceinte est elle même composée d'une double paroi isolée et de deux portes 7, 8 à ouvertures opposées. L'appareil peut avantageusement être disposé dans une ouverture pratiquée dans le mur mitoyen 9 séparant la cuisine de la chambre froide d'entreposage.

La zone de cuisson 2 et la porte d'entrée 7 de l'appareil sont situées côté cuisine, la zone réfrigérée 3 et la porte de sortie 8 étant situées dans la chambre froide. Les produits à cuire sont disposés sur les étagères d'un chariot 10 que l'on introduit initialement dans la zone de cuisson 2 (flèche A).

Cette dispostion est un élément important de sécurité, aucun chariot ne pouvant échapper à la phase de de refroidissement rapide, entre la fin de la cuisson et l'entreposage.

Dès la fermeture de la porte 7 et le programme de cuisson sélectionné, la cuisson peut commencer. Le mode de chauffage de l'enceinte 1 peut indifféremment être, soit de l'air pulsé sec ou humidifié par injection d'eau, produit par exemple par un ventilateur interne 12 et des résistances électriques 13, soit de la vapeur produite par un générateur séparé, soit une combinaison vapeur et air chaud pulsé, plus avantageuse pour certaines préparations culinaires qui l'exigent. Au terme de la cuisson le plateau 5 supportant le chariot effectue une rotation de 180 degrés suivant la flèche B et le transfert dans la zone de refroidissement rapide 3, amenant ainsi la partie libre du plateau rotatif dans la zone de cuisson 2 pour permettre l'introduction du chariot suivant 11.

Le refroidissement du premier chariot 10 peut être effectué par du froid produit soit par des moyens mécaniques (ventilateurs 14 et évaporateurs 15), soit par procédés cryogéniques, par injection de CO2 ou d'azote liquide.

Pendant la durée de refroidissement du premier chariot 10, la charge du deuxième chariot 11 introduit dans la zone de cuisson 2 cuira simultanément, sans perte de temps, sans manipulation, et avec la garantie absolue que les produits seront immédiatement refroidis après cuisson, sans attente intermédiaire, évitant ainsi tous les risques que cette dernière peut comporter sur le plan bactériologique. Dès la fin de la cuisson du deuxième chariot 11, le chariot 10 est sorti de la chambre froide (flèche C), le plateau rotatif effectue à nouveau un demi-tour pour transférer le chariot 11 dans la zone de refroidissment 3 et permettre côté cuisine, l'introduction d'un troisième chariot et ainsi de suite.

Le positionnement des divers éléments constitutifs donne à l'objet de l'invention un maximum d'effets utiles qui n'avaient pas été, à ce jour, obtenus par des dispositifs similaires.

## Revendications

1. Dispositif de cuisson et de refroidissement simultanés de produits alimentaires sur chariots,
caractérisée par un plateau rotatif (5) pouvant recevoir deux charges mobiles sur chariots (10, 11) et apte à assurer le transfert sans manipulation desdits chariots d'une zone de cuisson (2) isolée dans une zone de réfrigération (3) également isolée et contiguë, une paroi verticale (4) isolante séparant ces deux zones étant elle-même solidaire du plateau rotatif (5).

2. Dispositif selon la revendication 1, se caractérisant par le fait que le plateau rotatif (5) est disposé dans une enceinte (1) isolée unique, comportant une porte d'entrée (7) et une porte de sortie (8) à ouvertures opposées, et constitué de deux zones, une zone de cuisson (2) et une zone de réfrigération rapide (3), séparées par la paroi isolante verticale (4) montée sur le plateau rotatif (5), la rotation de ce dernier s'effectuant grâce à des roulettes (6) reposant sur le sol de ladite enceinte (1), ou à tout autre système de pivot.

3. Dispositif selon la revendication 2, se caractérisant par le fait que l'enceinte (1) est conçue de manière à permettre d'effectuer simultanément la cuisson des aliments disposés sur un chariot (11) situé dans la zone de cuisson (2) et le refroidissement des aliments disposés sur un second chariot (10) situé dans la zone de réfrigération rapide (3).

4. Dispositif selon les revendication 2 et 3, se caractérisant par le fait que l'enceinte (1) est disposée dans une ouverture pratiquée dans le mur mitoyen (9) séparant la cuisine de la chambre froide d'entreposage, la zone de cuisson (2) et la porte d'entrée (7) de l'enceinte étant situées côté cuisine, la zone de réfrigération (3) et la porte de sortie (8) étant situées dans la chambre froide, de manière à ce qu'aucun chariot ne puisse échapper à la phase de refroidissement rapide, entre la fin de la cuisson et l'entreposage.

5. Dispositif selon l'une quelconque des revendications précédentes 2 à 4, se caractérisant par le fait que le chauffage de la zone de cuisson (2) est obtenu par de l'air pulsé sec ou humidifié et/ou de la vapeur produite par un générateur séparé.

6. Dispositif selon l'une quelconque des revendications 2 à 5, se caractérisant par le fait que le refroidissement de la zone de réfrigération (3) est effectué au moyen de ventilateurs (14) et d'évaporateurs (15).

7. Dispositif selon l'une quelconque des revendications 2 à 5, se caractérisant par le fait que le refroidissement de la zone de réfrigération (3) est effectué par des procédés cryogéniques, à savoir injection de CO2 ou d'azote liquide.

## Claims

1. Apparatus for the simultaneous cooking and chilling of food products on trolleys, characterised by a rotary plate (5) adapted to accommodate two movable loads on trolleys (10, 11) and capable of transferring said trolleys, without handling them, from an insulated cooking zone (2) to an adjacent refrigeration zone (3), also insulated, a vertical insulating wall (4) separating these two zones, itself being integral with the rotary plate (5).

2. Apparatus according to claim 1, characterised in that the rotary plate (5) is arranged in a single insulated chamber (1) comprising an entry door (7) and an exit door (8) opening opposite one another, said chamber (1) consisting of two zones, a cooking zone (2) and a rapid refrigeration zone (3), separated by the vertical insulating wall (4) mounted on the rotary plate (5), the rotation of the latter being achieved by means of wheels (6) resting on the floor of said chamber (1), or any other rotating system.

3. Apparatus according to claim 2, characterised in that the chamber (1) is designed so as to allow the cooking of the food arranged on a trolley (11) located in the cooking zone (2) to take place at the same time as the chilling of the food arranged on a second trolley (10) located in the rapid refrigeration zone (3).

4. Apparatus according to claims 2 and 3, characterised by the fact that the chamber (1) is arranged in an opening formed in the party wall (9) separating the kitchen from the cold storage room, the cooking zone (2) and the entry door (7) of the chamber being located on the kitchen side, the refrigeration zone (3) and the exit door (8) being located in the cold room, so that no trolley can avoid the rapid chilling phase, between the end of cooking and putting into phase, between the end of cooking and putting into store.

5. Apparatus according to any one of the preceding claims 2 to 4, characterised in that the cooking zone (2) is heated by dry or humidified pulsed air and/or steam produced by a separate generator.

6. Apparatus according to any one of claims 2 to 5, characterised in that the refrigeration zone (3) is cooled by means of fans (14) and evaporators (15).

7. Apparatus according to any one of claims 2 to 5, characterised in that the refrigeration zone (3) is cooled by cryogenic processes, namely the injection of CO₂ or liquid nitrogen.

## Patentansprüche

1. Vorrichtung zum gleichzeitigen Garen und Kühlen von Lebensmitteln auf Wagen, gekennzeichnet durch eine drehbare Scheibe (5), die zwei auf Wagen (10,11) bewegliche Chargen aufnehmen kann und geeignet ist, den Transport ohne Manipulation dieser Wagen von einer isolierten Garzone (2) in eine ebenfalls isolierte und benachbarte Gefrierzone (3) zu transportieren, durch eine isolierende vertikale Wand (4), die die zwei Zonen trennt und mit der drehbaren Scheibe (5) eine feste Einheit bildet.

2. Vorrichtung nach Anspruch 1, dadurch gekennzeichnet, daß die drehbare Scheibe (5) in einer isolierten Einfassung angeordnet ist, die eine Eingangstüre (7) und eine Ausgangstüre (8) an gegenüberliegenden Öffnungen aufweist und durch zwei Zonen gebildet ist, eine Garzone (2) und eine Schnellkühlzone (3), die durch eine isolierende vertikale Wand (4) getrennt sind, die auf der drehbaren Scheibe (5) montiert ist, wobei die Rotation der letzteren auf Rollen (6), die auf dem Boden der Einfassung (1) angeordnet sind, oder durch ein anderes Drehsystem erfolgt.

3. Vorrichtung nach Anspruch 2, dadurch gekennzeichnet, daß die Einfassung (1) dergestalt entworfen ist, daß sie gleichzeitig das Garen der Lebensmittel auf dem wagen (11), der sich in der Garzone (2) befindet und das Gefrieren der Lebensmittel auf dem zweiten Wagen (10), der sich in der Schnellgefrierzone (3) befindet, ermöglicht.

4. Vorrichtung nach Anspruch 2 und 3, dadurch gekennzeichnet, daß die Einfassung (1) in einer Öffnung, die in einer in der Mitte befindlichen Mauer (9) vorgesehen ist, welche die Küche und die Kühlkammer für die Zwischenlagerung der Produkte trennt, wobei die Garzone (2) und die Eingangstüre (7) der Einfassung auf der Seite der Küche, die Gefrierzone (3) und die Ausgangstüre (8) in der Kühlkammer gelegen sind, derart, daß kein Wagen zwischen dem Ende des Garvorgangs und der Zwischenlagerung der Schnellgefrierphase entgehen kann.

5. Vorrichtung nach einem der vorhergehenden Ansprüche 2 bis 4, dadurch gekennzeichnet, daß die Erwärmung der Garzone (2) durch umgewälzte Luft, trocken oder feucht, und/oder Dampf, der in einem separaten Generator erzeugt wird, erreicht wird.

6. Vorrichtung nach einem der Ansprüche 2 bis 5, dadurch gekennzeichnet, daß das Gefrieren in der Gefrierzone (3) mittels Ventilatoren (14) und Verdampfern (15) bewirkt wird.

7. Vorrichtung nach einem der Ansprüche 2 bis 5, dadurch gekennzeichnet, daß der Gefriervorgang in der Gefrierzone (3) durch Tiefkühlverfahren, nämlich durch Einspritzen von flüssigem Kohlendioxid oder flüssigem Stickstoff, bewirkt wird.
